# EUROPÄISCHE PATENTSCHRIFT

(11) **EP 0 977 521 B1**
(45) Veröffentlichungstag und Bekanntmachung des Hinweises auf die Patenterteilung: **03.12.2003**
(21) Anmeldenummer: 98913694.0
(22) Anmeldetag: 10.03.1998
(51) Int. Cl.: A61C 17/34

(54) **BÜRSTENTEIL FÜR EINE ELEKTRISCHE ZAHNBÜRSTE**
BRUSH PART FOR AN ELECTRIC TOOTHBRUSH
PARTIE DE BROSSE POUR BROSSE à DENTS ELECTRIQUE

(30) Priorität: 24.04.1997 DE 19717334
(43) Veröffentlichungstag der Anmeldung: 09.02.2000
(73) Patentinhaber: Braun GmbH, Kronberg (DE)
(72) Erfinder: FRITSCH, Thomas, D-65817 Eppstein (DE)
(86) Internationale Anmeldenummer: EP9801374
(87) Internationale Veröffentlichungsnummer: WO98047444

(56) Entgegenhaltungen:
- WO-A-96/37164
- US-A- 2 766 470
- US-A- 5 504 961

## Beschreibung

Die Erfindung betrifft ein Bürstenteil für eine elektrische Zahnbürste, mit einem Trägerrohr, in dem eine um eine Längsachse drehbar gelagerte und antreibbare Aufsteckwelle untergebracht ist, die mit einem exzentrisch zur Längsachse angeordneten Mitnehmer versehen ist, mit einem Borstenträger, der um eine Querachse drehbar gelagert ist und einen exzentrisch zur Querachse angeordneten Aufnehmer aufweist, der Aufnehmer mit dem Mitnehmer fest verbunden ist, wobei eine Drehbewegung der Aufsteckwelle um die Längsachse eine Drehbewegung des Borstenträgers um die Querachse bewirkt.

Ein derartiges Bürstenteil ist aus der internationalen Patentanmeldung WO 94/12121 bekannt. Ist das Bürstenteil auf eine elektrische Zahnbürste aufgesteckt und befindet sich die elektrische Zahnbürste in ihrem eingeschalteten Betriebszustand, so führt die Aufsteckwelle eine oszillierende Drehbewegung aus. Diese Drehbewegung wird von dem Mitnehmer auf den Aufnehmer und von diesem auf den Borstenträger übertragen. Dadurch führt auch der Borstenträger mit den in Richtung der Querachse abstehenden Borstenbüscheln eine oszillierende Drehbewegung aus.

Bei dem aus der internationalen Patentanmeldung WO 94/12121 bekannten Bürstenteil bildet das Trägerrohr ein feststehendes Bauteil, während die Aufsteckwelle, der Borstenträger, der Mitnehmer und der Aufnehmer bewegliche Bauteile darstellen. Die genannten beweglichen Bauteile haben Spiel in ihren Lagerungen und können im Rahmen dieses Spiels freie Bewegungen ausführen. Dabei stoßen sie aneinander oder an dem oder den feststehenden Bauteilen an. Dies führt zu Klappergeräuschen im eingeschalteten Betriebszustand der elektrischen Zahnbürste.

Aus der US 2,766,470 ist eine elektrische Zahnbürste bekannt, bei der eine Antriebswelle mit einem Borstenträger über eine Reibungskupplung verbunden ist. Zur reibungsschlüssigen Verbindung der zu kuppelnden Teile ist eine Feder vorgesehen.

Die US 5,504,961 offenbart eine elektrische Zahnbürste mit einem Bürstenteil, welches eine mehrteilige Welle aufweist. Wellenstücke dieser Welle stehen über Verzahnungen miteinander in Eingriff, wobei die Wellenstücke unter der Federvorspannung einer Feder stehen und die Verzahnungen mittels dieser Federvorspannung gegeneinander gepreßt werden.

Aufgabe der Erfindung ist es, ein Bürstenteil für eine elektrische Zahnbürste zu schaffen, bei dem möglichst keine Klappergeräusche im eingeschalteten Betriebszustand der elektrischen Zahnbürste vorhanden sind.

Diese Aufgabe wird bei einem Bürstenteil für eine elektrische Zahnbürste der eingangs genannten Art durch die Erfindung dadurch gelöst, daß die Aufsteckwelle und der Borstenträger gegeneinander verspannt sind.

Durch das Verspannen werden die Aufsteckwelle und der Borstenträger gegen ihre Lagerungen gedrückt. Dies hat zur Folge, daß die beiden Bauteile im ausgeschalteten Betriebszustand der elektrischen Zahnbürste trotz des vorhandenen Spiels keine freien Bewegungen mehr in ihren Lagerungen ausführen können. Im eingeschalteten Betriebszustand der elektrischen Zahnbürste werden die beiden Bauteile weiterhin gegen ihre Lagerungen gedrückt. Dies hat zur Folge, daß in den Lagerungen eine Reibung entsteht, die das Entstehen von freien Bewegungen der Aufsteckwelle und des Borstenträgers in ihren Lagerungen verhindert oder zumindest verringert. Ein Anschlagen oder Anstoßen der beweglichen Bauteile aneinander oder an dem oder den feststehenden Bauteilen wird somit vermieden, so daß auch keine Klappergeräusche mehr vorhanden sind.

Es ist möglich, daß nur die Aufsteckwelle oder nur der Borstenträger jeweils separat gegen das Trägerrohr verspannt ist. Damit wird erreicht, daß immer nur das jeweilige Bauteil nicht mehr klappert. Es ist ebenfalls möglich, daß die Aufsteckwelle und der Borstenträger gegeneinander, also unabhängig vom Trägerrohr verspannt sind und auf diese Weise ein Klappern verhindert wird. Und es ist ebenfalls möglich, daß die Aufsteckwelle und der Borstenträger gemeinsam gegen das Trägerrohr verspannt sind, so daß auf diese Weise ein Klappern unterbunden wird.

Bei einer vorteilhaften Ausgestaltung der Erfindung sind die Aufsteckwelle und der Borstenträger gegen das Trägerrohr verspannt. Damit wird erreicht, daß durch die genannten Bauteile kein Klappern mehr hervorgerufen wird.

Es ist möglich, daß die Aufsteckwelle, der Borstenträger, der Mitnehmer und der Aufnehmer jeweils separat gegen das Trägerrohr verspannt sind. Ebenfalls ist es möglich, daß die genannten Bauteile gegeneinander, also unabhängig vom Trägerrohr verspannt sind. Und es ist ebenfalls möglich, daß die genannten Bauteile gemeinsam gegen das Trägerrohr verspannt sind.

Besonders zweckmäßig ist es, wenn zum Verspannen Federmittel vorgesehen sind. Dies stellt eine besonders einfache Art und Weise dar, die jeweiligen Bauteile gegeneinander zu verspannen. Des weiteren können die Federmittel innerhalb des Trägerrohrs untergebracht werden, so daß sie ohne größeren Aufwand in das bekannte Bürstenteil konstruktiv integriert werden können.

Bei einer vorteilhaften Weiterbildung der Erfindung ist eine Schraubendruckfeder vorgesehen, die auf der dem Aufnehmer abgewandten Seite des Mitnehmers gehalten ist und sich an der Aufsteckwelle abstützt. Dabei ist es besonders zweckmäßig, wenn die Schraubendruckfeder durch eine Verbreiterung des Mitnehmers oder durch eine auf den Mitnehmer aufgesteckte Buchse gehalten ist. Durch diese Weiterbildung kann das Verspannen der Bauteile besonders einfach und kostengünstig erreicht werden.

Bei anderen vorteilhaften Weiterbildungen der Erfindung ist eine Schraubendruckfeder vorgesehen, die auf der dem Aufnehmer zugewandten Seite des Mitnehmers angeordnet ist und sich an dem Aufnehmer und der Aufsteckwelle abstützt. Es kann auch eine Schraubenzugfeder vorgesehen sein, die an der dem Aufnehmer abgewandten Seite des Mitnehmers und an der Aufsteckwelle gehalten ist. Auch diese Weiterbildungen stellen einfache und kostengünstige Möglichkeiten des Verspannens der Bauteile dar.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.
- Fig. 1: zeigt einen schematischen Längsschnitt eines ersten Ausführungsbeispiels eines erfindungsgemäßen Bürstenteils für eine elektrische Zahnbürste entlang der Ebene I - I der Figur 2,
- Fig. 2: zeigt einen schematischen Längsschnitt des Bürstenteils der Figur 1 entlang der Ebene II - II der Figur 1,
- Fig. 3: zeigt einen schematischen Längsschnitt eines zweiten Ausführungsbeispiels eines erfindungsgemäßen Bürstenteils für eine elektrische Zahnbürste,
- Fig. 4: zeigt einen schematischen Längsschnitt eines dritten Ausführungsbeispiels eines erfindungsgemäßen Bürstenteils für eine elektrische Zahnbürste, und
- Fig. 5: zeigt einen schematischen Längsschnitt eines vierten Ausführungsbeispiels eines erfindungsgemäßen Bürstenteils für eine elektrische Zahnbürste.

Die nachfolgende Beschreibung von Ausführungsbeispielen von erfindungsgemäßen Bürstenteilen basiert auf der eingangs bereits als Stand der Technik genannten internationalen Patentanmeldung WO 94/12121, deren vollständiger ....

Offenbarungsgehalt hiermit durch ausdrückliche Bezugnahme in den Offenbarungsgehalt der vorliegenden Beschreibung aufgenommen wird. Insbesondere wird auf die allgemeine Beschreibung der elektrischen Zahnbürste und des Bürstenteils in der internationalen Patentanmeldung WO 94/12121 verwiesen sowie auf die Ausführungsformen nach den Figuren 7a bis 7e, den Figuren 8a bis 8e und der Figur 9 der internationalen Patentanmeldung WO 84/12121.

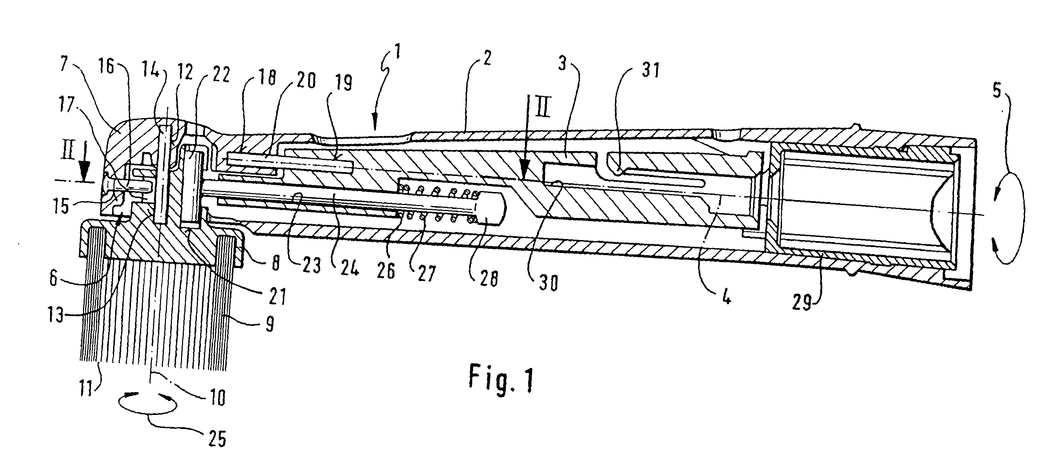

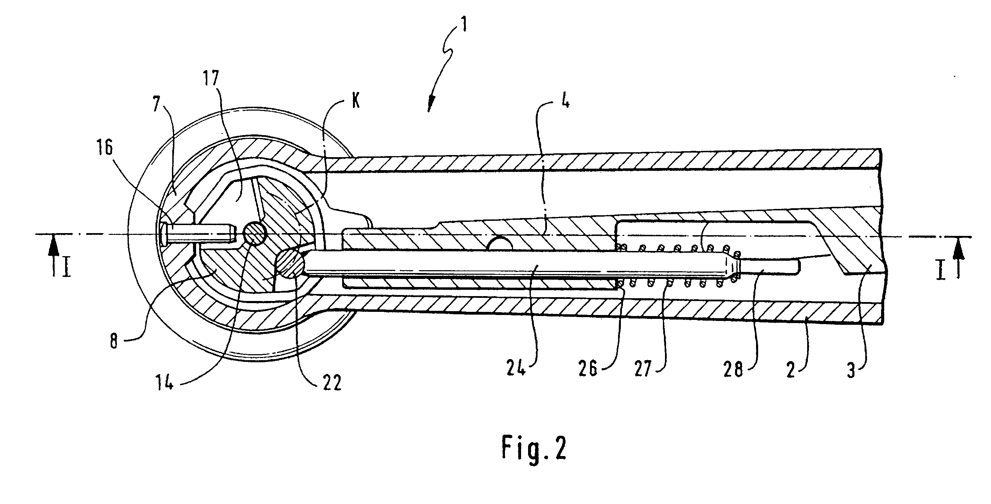

In den Figuren 1 und 2 ist ein erstes Ausführungsbeispiel eines Bürstenteils 1 dargestellt, das auf ein Griffteil einer elektrischen Zahnbürste aufsteckbar ist.

Das Bürstenteil 1 weist ein Trägerrohr 2 auf, in dem eine Aufsteckwelle 3 untergebracht ist. Das Trägerrohr 2 und die Aufsteckwelle 3 erstrecken sich ungefähr in Richtung einer Längsachse 4. Die Aufsteckwelle 3 ist mit einem in dem Griffteil untergebrachten Elektromotor koppelbar, der die Aufsteckwelle im eingeschalteten Betriebszustand in eine oszillierende Drehbewegung um die Längsachse 4 versetzt. Dies ist in der Figur 1 durch einen Pfeil 5 kenntlich gemacht.

An seinem dem Griffteil der elektrischen Zahnbürste abgewandten Ende geht das Trägerrohr 2 in eine mit einer Öffnung 6 versehene, topfförmige Aufnahme 7 über, in der ein Borstenträger 8 untergebracht ist. Der Borstenträger 8 ist scheibenförmig ausgestaltet und deckt die Öffnung 6 der Aufnahme 7 ab. Von der der Aufnahme 7 abgewandten Seite des Borstenträgers 8 stehen eine Mehrzahl von Borstenbüscheln 9 in Richtung einer Querachse 10 ab, deren freie Enden eine Borstenfläche 11 bilden. Die Querachse 10 ist in einem Winkel von etwa 90 Grad zur Längsachse 4 angeordnet.

In der Aufnahme 7 und in dem Borstenträger 8 sind einander zugeordnete Sacklöcher 12, 13 vorgesehen, die koaxial zur Querachse 10 angeordnet sind. In das Sackloch 12 der Aufnahme 7 ist ein Stift 14 fest eingepreßt, der in dem Sackloch 13 des Borstenträgers 8 Spiel hat, so daß der Borstenträger 8 um den Stift 14 und damit um die Querachse 10 schwenkbar ist.

Etwa parallel zur Längsachse 4 ist in der Aufnahme 7 eine Bohrung 15 vorgesehen, in die ein Sicherungsstift 16 fest eingepreßt ist. Der Sicherungsstift 16 greift in eine in dem Borstenträger 8 eingebrachte Nut 17 ein und hält damit den Borstenträger 8 auf dem Stift 14 und damit in der Aufnahme 7.

In dem der Aufnahme 7 zugewandten Ende des Trägerrohrs 2 und in der Aufsteckwelle 3 sind einander zugeordnete Sacklöcher 18, 19 vorgesehen, die koaxial zur Längsachse 4 angeordnet sind. In das Sackloch 19 der Aufsteckwelle 3 ist ein Stift 20 fest eingepreßt, der in dem Sackloch 18 des Trägerrohrs 2 Spiel hat, so daß die Aufsteckwelle 3 mit dem Stift 20 um die Längsachse 4 schwenkbar ist.

Mit einem Abstand zur Querachse 10 ist in dem Borstenträger 8 ein zur Querachse 10 etwa parallel angeordnetes Sackloch 21 vorgesehen, in dem ein zapfenförmiger Aufnehmer 22 mit Spiel schwenkbar und längsverschiebbar untergebracht ist. Mit Abstand zur Längsachse 4 ist in der Aufsteckwelle 3 eine zur Längsachse 4 etwa parallel angeordnete Durchgangsbohrung 23 vorgesehen, in der ein stiftförmiger Mitnehmer 24 mit Spiel schwenkbar und längsverschiebbar untergebracht ist. Der Aufnehmer 22 und der Mitnehmer 24 sind unter einem Winkel von etwa 90 Grad fest miteinander verbunden.

Wird die Aufsteckwelle 3 in die bereits erwähnte oszillierende Drehbewegung 5 um die Längsachse 4 versetzt, so wird diese Bewegung über den Mitnehmer 24 und den Aufnehmer 22 auf den Borstenträger 8 übertragen. Der Borstenträger 8 führt dann eine oszillierende Drehbewegung um die Querachse 10 aus. Dies ist in der Figur 1 durch den Pfeil 25 kenntlich gemacht. Die Drehbewegung 5 der Aufsteckwelle 3 und die Drehbewegung 25 des Borstenträgers 8 haben dabei die gleiche Frequenz und die gleiche Phase, ihre Amplituden können jedoch verschieden sein.

Das dem Aufnehmer 22 abgewandte freie Ende des stiftförmigen Mitnehmers 24 ragt aus der Durchgangsbohrung 23 der Aufsteckwelle 3 heraus und steht ein Stück über einen Rand 26 der Aufsteckwelle 3 über. Auf den Mitnehmer 24 ist im Bereich des überstehenden Stücks eine Schraubendruckfeder 27 aufgesteckt. Das freie Ende des Mitnehmers 24 ist zusammengedrückt und abgeflacht und bildet eine Verbreiterung 28. Die Schraubendruckfeder 27 liegt somit mit ihrem einen Ende an der Verbreiterung 28 an und wird von dieser gehalten. Des weitern stützt sich die Schraubendruckfeder 27 mit ihrem anderen Ende an dem Rand 26 der Aufsteckwelle 3 ab.

Die Kraft der Schraubendruckfeder 27 wirkt in Richtung der Längsachse 4 und drückt die Verbreiterung 28 des Mitnehmers 24 von dem Rand 26 der Aufsteckwelle 3 weg. Die Kraft der Schraubendruckfeder 27 wirkt somit etwa quer zu dem mit dem Mitnehmer 24 verbundenen Aufnehmer 22 und zu dem den Borstenträger 8 lagernden Stift 14. Des weiteren wirkt die Kraft der Schraubendruckfeder 27 etwa parallel auf den die Aufsteckwelle 3 lagernden Stift 20. Durch die Kraft der Schraubendruckfeder 27 entsteht im eingeschalteten Betriebszustand eine Reibung des Aufnehmers 22 in dem Sackloch 21 des Borstenträgers 8 sowie eine Reibung des Stifts 14 in dem Sackloch 13 des Borstenträgers 8. Des weiteren entsteht eine Reibung der Stirnfläche des Stifts 20 in dem Sackloch 18 des Trägerrohrs 2.

Durch die Kraft der Schraubendruckfeder 27 und insbesondere durch die im eingeschalteten Betriebszustand entstehende Reibung werden die Aufsteckwelle 3 und der Borstenträger 8 miteinander verspannt. Des weiteren werden durch die Kraft der Schraubendruckfeder 27 auch der Aufnehmer 22 und der Mitnehmer 24 mit der Aufsteckwelle 3 und dem Borstenträger 8 verspannt. Die Verspannung wirkt dabei zwischen den genannten beweglichen Bauteilen sowie zwischen diesen beweglichen Bauteilen und dem feststehenden Trägerrohr 2 des Bürstenteils 1. Durch die Kraft der Schraubendruckfeder 27 und die daraus resultierende Verspannung werden freie Bewegungen der genannten Bauteile verhindert.

Die Aufsteckwelle 3 und der Borstenträger 8 können sich somit trotz des Spiels nicht mehr frei in ihren Lagerungen bewegen. Insbesondere kann sich aufgrund der Reibung der Stift 14 trotz seines Spiels nicht mehr frei in dem Sackloch 13 des Borstenträgers 8 bewegen. Ebenfalls kann sich aufgrund der Reibung der Stift 20 trotz seines Spiels nicht mehr frei in dem Sackloch 18 des Trägerrohrs 2 bewegen. Durch die Verspannung der Aufsteckwelle 3 und des Borstenträgers 8 werden also freie Bewegungen unterbunden, so daß ein Anstoßen der Aufsteckwelle 3 oder des Borstenträgers 8 an sonstige Bauteile und ein damit verbundenes Klappergeräusch nicht möglich ist.

Der Aufnehmer 22 und der Mitnehmer 24 können sich ebenfalls trotz des Spiels nicht mehr frei in ihren Lagerungen bewegen. Insbesondere kann sich aufgrund der Reibung der Aufnehmer 22 trotz des Spiels nicht mehr frei in dem Sackloch 21 bewegen. Ebenfalls kann sich aufgrund der Kraft der Schraubendruckfeder 27 der Mitnehmer 24 trotz des Spiels nicht mehr frei in der Durchgangsbohrung 23 bewegen. Durch die Verspannung des Aufnehmers 22 und des Mitnehmers 24 sowie aufgrund deren fester Verbindung werden also freie Bewegungen unterbunden, so daß ein Anstoßen an sonstige Bauteile und ein damit verbundenes Klappergeräusch nicht möglich ist.

Selbst nach einer längeren Benutzungsdauer des Bürstenteils 1 und einer damit verbundenen Abnutzung der Lagerungen der Aufsteckwelle 3, des Borstenträgers 8, des Aufnehmers 22 und des Mitnehmers 24 insbesondere durch die in der Zahnpasta enthaltenen Schleifkörper wird das entstehende größere Spiel der genannten Bauteile durch die mit der Schraubendruckfeder 27 bewirkte Verspannung ausgeglichen. Auch nach längerer Benutzung des Bürstenteils 1 wird also durch die Verspannung der genannten Bauteile ein Klappergeräusch vermieden.

Wie insbesondere der Figur 2 zu entnehmen ist, beschreibt der Aufnehmer 22 im eingeschalteten Zustand eine oszillierende Drehbewegung auf einer Kreisbahn K um die Querachse 10. Dadurch wird die Schraubendruckfeder 27 bei dieser Drehewegung abwechselnd zusammengedrückt und wieder entlastet. In den beiden Umkehrpunkten der Drehbewegung ist die Schraubendruckfeder 27 am meisten zusammengedrückt, so daß sie in diesen Punkten ihre größte Kraft abgibt. Dadurch wird ein Überschwingen des Borstenträgers 2 im eingeschalteten Betriebszustand vermieden.

Wie beschrieben, ist das Bürstenteil 1 auf die elektrische Zahnbürste aufsteckbar. Zu diesem Zweck ist das Trägerrohr 2 an seinem der Zahnbürste zugewandten Ende mit einem Profilring 29 versehen, in den ein vorn an der Zahnbürste angeordneter Hals gesteckt werden kann. Der Profilring 29 überträgt Kräfte und Momente zwischen dem Trägerrohr 2 des Bürstenteils 1 und dem Hals der Elektrozahnbürste. Die Aufsteckwelle 3 hat an ihrem der Zahnbürste zugewandten Ende ein zur Längsachse 4 konzentrisches Sackloch mit einem abgeflachten Bereich 30, in das die von einem in der Zahnbürste untergebrachten Elektromotor bewegte Antriebswelle eingreift. Der abgeflachte Bereich 30 überträgt Drehmoment und Drehbewegung von der Antriebswelle der Zahnbürste auf die Aufsteckwelle 3 des Mundstücks 1.

Des weiteren ist die Aufsteckwelle 3 mit einem in den abgeflachten Bereich 30 hineinragenden Haken 31 versehen, der in eine zugeordnete Kerbe der Antriebswelle der Zahnbürste eingreift und die Aufsteckwelle 3 und damit das Bürstenteil 1 auf der Antriebswelle der elektrischen Zahnbürste fixiert. Durch die mittels der Schraubendruckfeder 27 bewirkte Verspannung wird das Spiel der Aufsteckwelle 3 innerhalb des Trägerrohrs 2 in Richtung der Längsachse 4 absorbiert. Dies hat zur Folge, daß die Aufsteckwelle 3 und damit das Bürstenteil 1 spielfrei auf der Antriebswelle der elektrischen Zahnbürste angeordnet ist. Es ist somit kein Wackeln zwischen dem Bürstenteil 1 und dem Griffteil der elektrischen Zahnbürste vorhanden.

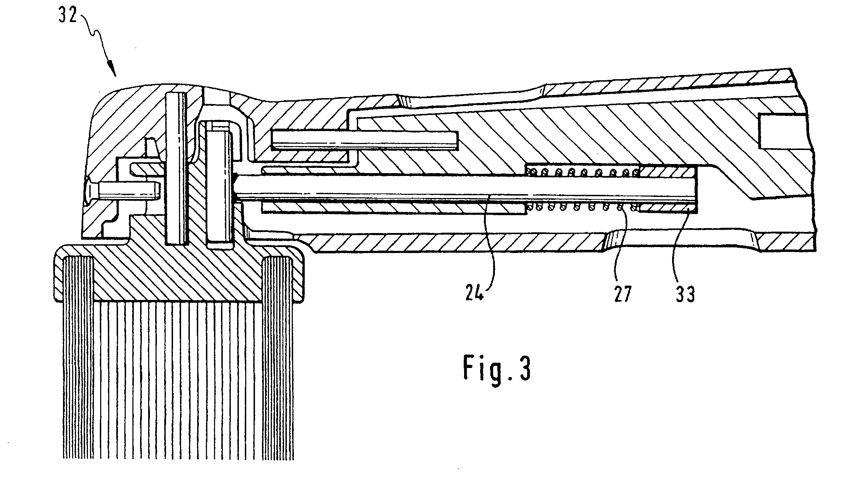

In der Figur 3 ist ein zweites Ausführungsbeispiel eines Bürstenteils 32 dargestellt, das auf ein Griffteil einer elektrischen Zahnbürste aufsteckbar ist. Das Bürstenteil 32 der Figur 3 unterscheidet sich von dem Bürstenteil 1 der Figuren 1 und 2 nur dadurch, daß anstelle der Verbreiterung 28 des Bürstenteils 1 bei dem Bürstenteil 32 zur Sicherung der Schraubendruckfeder 27 eine Hülse 33 fest auf das freie Ende des Mitnehmers 24 aufgepreßt ist.

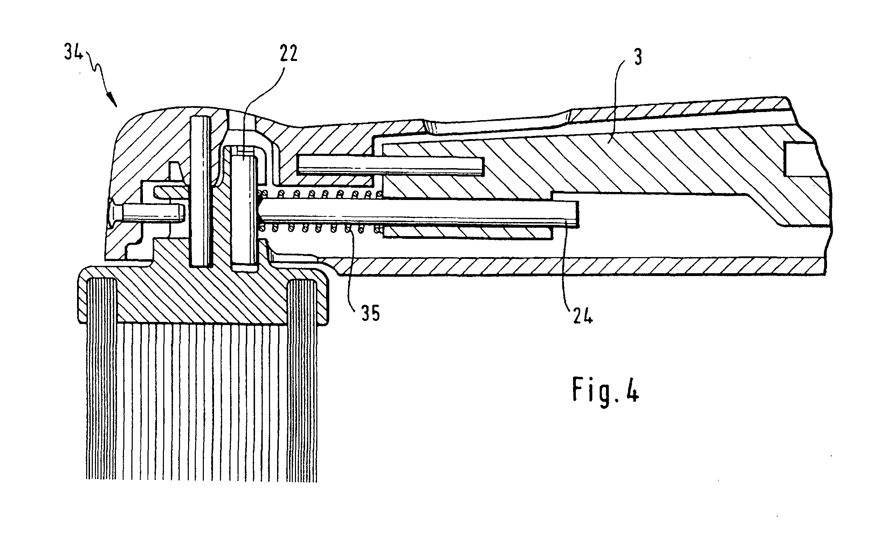

In der Figur 4 ist ein drittes Ausführungsbeispiel eines Bürstenteils 34 dargestellt, das auf ein Griffteil einer elektrischen Zahnbürste aufsteckbar ist. Das Bürstenteil 34 der Figur 4 unterscheidet sich von dem Bürstenteil 1 der Figuren 1 und 2 nur dadurch, daß anstelle der Schraubendruckfeder 27, die auf das über den Rand 26 der Aufsteckwelle 3 hinausragende Stück des Mitnehmers 24 aufgesteckt ist, bei dem Bürstenteil 34 eine Schraubendruckfeder 35 auf der dem Aufnehmer 22 zugewandten Seite des Mitnehmers 24 angeordnet ist, also zwischen dem Aufnehmer 22 und der Aufsteckwelle 3. Die Schraubendruckfeder 35 stützt sich somit an dem Aufnehmer 22 und der Aufsteckwelle 3 ab.

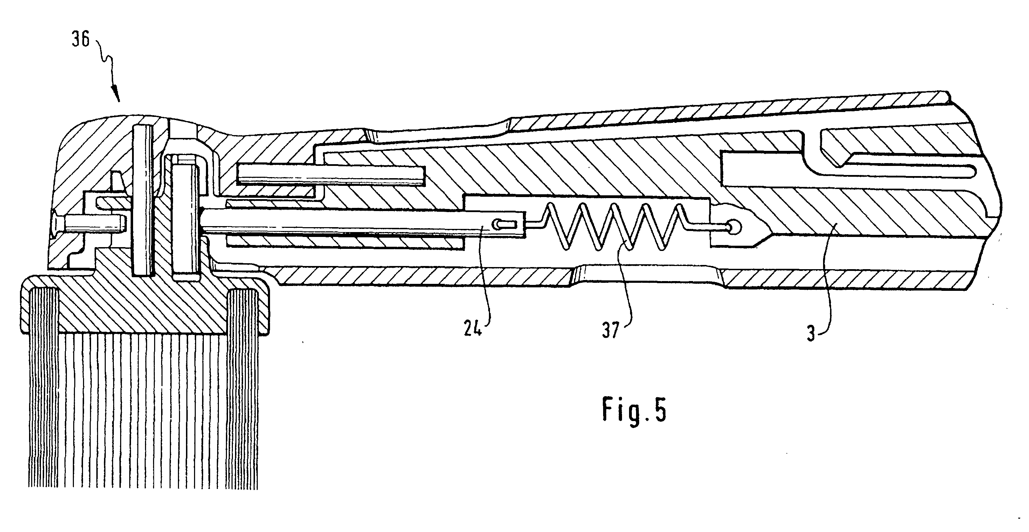

In der Figur 5 ist ein viertes Ausführungsbeispiel eines Bürstenteils 36 dargestellt, das auf ein Griffteil einer elektrischen Zahnbürste aufsteckbar ist. Das Bürstenteil 36 der Figur 5 unterscheidet sich von dem Bürstenteil 1 der Figuren 1 und 2 nur dadurch, daß anstelle der Schraubendruckfeder 27 des Bürstenteils 1 bei dem Bürstenteil 36 eine Schraubenzugfeder 37 vorgesehen ist, die an der dem Aufnehmer 22 abgewandten Seite des Mitnehmers 24 und an der Aufsteckwelle 3 gehalten ist. Zur Halterung ist die Schraubenzugfeder 37 dort durch Öffnungen in dem Mitnehmer 24 und in der Aufsteckwelle 3 hindurchgesteckt.

## Patentansprüche

1. Bürstenteil (1, 32, 34, 36) für eine elektrische Zahnbürste, mit einem Trägerrohr (2), in dem eine um eine Längsachse (4) drehbar gelagerte und antreibbare Aufsteckwelle (3) untergebracht ist, die mit einem exzentrisch zur Längsachse (4) angeordneten Mitnehmer (24) versehen ist, mit einem Borstenträger (8), der um eine Querachse (10) drehbar gelagert ist und einen exzentrisch zur Querachse (10) angeordneten Aufnehmer (22) aufweist, der Aufnehmer (22) mit dem Mitnehmer (24) fest verbunden ist, wobei eine Drehbewegung (5) der Aufsteckwelle (3) um die Längsachse (4) eine Drehbewegung (25) des Borstenträgers (8) um die Querachse (10) bewirkt, **dadurch gekennzeichnet, daß** die Aufsteckwelle (3) und der Borstenträger (8) gegeneinander verspannt sind.

2. Bürstenteil (1, 32, 34, 36) nach Anspruch 1, **dadurch gekennzeichnet, daß** die Aufsteckwelle (3) und der Borstenträger (8) gegen das Trägerrohr (2) verspannt sind.

3. Bürstenteil (1, 32, 34, 36) nach Anspruch 1 oder Anspruch 2, **dadurch gekennzeichnet, daß** zum Verspannen Federmittel vorgesehen sind.

4. Bürstenteil (1, 32) nach einem der Ansprüche 1 bis 3, **dadurch gekennzeichnet, daß** eine Schraubendruckfeder (27) vorgesehen ist, die auf der dem Aufnehmer (22) abgewandten Seite des Mitnehmers (24) gehalten ist und sich an der Aufsteckwelle (3) abstützt.

5. Bürstenteil (1, 32) nach Anspruch 4, **dadurch gekennzeichnet, daß** die Schraubendruckfeder (27) durch eine Verbreiterung (28) des Mitnehmers (24) oder durch eine auf den Mitnehmer (24) bzw. eine aufgepreßte Hülse (33) gehalten ist.

6. Bürstenteil (34) nach einem der Ansprüche 1 bis 3, **dadurch gekennzeichnet, daß** eine Schraubendruckfeder (35) vorgesehen ist, die auf der dem Aufnehmer (22) zugewandten Seite des Mitnehmers (24) angeordnet ist und sich an dem Aufnehmer (22) und der Aufsteckwelle (3) abstützt.

7. Bürstenteil (36) nach einem der Ansprüche 1 bis 3, **dadurch gekennzeichnet, daß** eine Schraubenzugfeder (37) vorgesehen ist, die an der dem Aufnehmer (22) abgewandten Seite des Mitnehmers (24) und an der Aufsteckwelle (3) gehalten ist.

8. Bürstenteil (1, 32, 34, 36) nach einem der Ansprüche 1 bis 7, **dadurch gekennzeichnet, daß** die Verspannung in Richtung der Längsachse (4) wirkt.

9. Bürstenteil (1, 32, 34, 36) nach einem der Ansprüche 1 bis 8, **dadurch gekennzeichnet, daß** der Mitnehmer (24) und der Aufnehmer (22) mit der Aufsteckwelle (3) und dem Borstenträger (8) verspannt sind.

10. Elektrische Zahnbürste mit einem ankuppelbaren, insbesondere aufsteckbaren Bürstenteil (1, 32, 34, 36) nach einem der vorhergehenden Ansprüche.

## Claims

1. A brush section (1, 32, 34, 36) for an electric toothbrush, having a mounting tube (2) in which is accommodated an actuatable plug-on shaft (3) mounted for rotation about a Iongitudinal axis (4), said shaft being equipped with a driving element (24) arranged eccentrically to the longitudinal axis (4), having a bristle carrier (8) mounted for rotation about a transverse axis (10) and equipped with a driven element (22) arranged eccentrically to the transverse axis (10), said driven element (22) being fixedly joined together with the driving element (24), whereby a rotary movement (5) of the plug-on shaft (3) about the longitudinal axis (4) produces a rotary movement (25) of the bristle carrier (8) about the transverse axis (10), **characterized in that** the plug-on shaft (3) and the bristle carrier (8) are braced against each other.

2. The brush section (1, 32, 34, 36) according to claim 1, **characterized in that** the plug-on shaft (3) and the bristle carrier (8) are braced against the mounting tube (2).

3. The brush section (1, 32, 34, 36) according to claim 1 or claim 2, **characterized in that** spring means are provided for the bracing.

4. The brush section (1, 32) according to any one of the claims 1 to 3, **characterized in that** provision is made for a helical compression spring (27) held on the side of the driving element (24) remote from the driven element (22) and bearing against the plug-on shaft (3).

5. The brush section (1, 32) according to claim 4, **characterized in that** the helical compression spring (27) is held by an enlargement (28) of the driving element (24) or by a sleeve (33) press-fitted onto the driving element (24).

6. The brush section (34) according to any one of the claims 1 to 3, **characterized in that** provision is made for a helical compression spring (35) arranged on the side of the driving element (24) close to the driven element (22) and bearing against the driven element (22) and the plug-on shaft (3).

7. The brush section (36) according to any one of the claims 1 to 3, **characterized in that** provision is made for a helical tension spring (37) held on the side of the driving element (24) remote from the driven element (22) and on the plug-on shaft (3).

8. The brush section (1, 32, 34, 36) according to any one of the claims 1 to 7, **characterized in that** the bracing acts in the direction of the longitudinal axis (4).

9. The brush section (1, 32, 34, 36) according to any one of the claims 1 to 8, **characterized in that** the driving element (24) and the driven element (22) are braced with the plug-on shaft (3) and the bristle carrier (8).

10. An electric toothbrush having a brush section (1, 32, 34, 36) adapted to be coupled therewith, particularly push-fitted thereon, according to any one of the preceding claims.

## Revendications

1. Partie de brosse (1, 32, 34, 36) pour une brosse à dents électrique, avec un tube de support (2) dans lequel est placé un arbre à emboîtement (3) monté en rotation autour d'un axe longitudinal (4) et pouvant être entraîné, qui est pourvu d'un entraîneur (24) disposé de façon excentrique par rapport à l'axe longitudinal (4), avec un support de soies (8) qui est monté en rotation autour d'un axe transversal (10) et qui présente un doigt (22) disposé de façon excentrique par rapport à l'axe transversal (10), le doigt (22) est relié de façon fixe à l'entraîneur (24), dans laquelle un mouvement de rotation (5) de l'arbre à emboîtement (3) autour de l'axe longitudinal (4) provoque un mouvement de rotation (25) du support de soies (8) autour de l'axe transversal (10), **caractérisée en ce que** l'arbre à emboîtement (3) et le support de soies (8) sont mis sous contrainte l'un par rapport à l'autre.

2. Partie de brosse (1, 32, 34, 36) selon la revendication 1, **caractérisée en ce que** l'arbre à emboîtement (3) et le support de soies (8) sont mis sous contrainte par rapport au tube de support (2).

3. Partie de brosse (1, 32, 34, 36) selon la revendication 1 ou la revendication 2, **caractérisée en ce qu'**il est prévu des moyens élastiques pour la mise sous contrainte.

4. Partie de brosse (1, 32) selon l'une quelconque des revendications 1 à 3, **caractérisée en ce qu'**il est prévu un ressort hélicoïdal de compression (27), qui est maintenu sur le côté de l'entraîneur (24) situé à l'opposé du doigt (22) et qui prend appui sur l'arbre à emboîtement (3).

5. Partie de brosse (1, 32) selon la revendication 4, **caractérisée en ce que** le ressort hélicoïdal de compression (27) est maintenu par un renflement (28) de l'entraîneur (24) ou par une douille (33) posée, respectivement par pressage, sur l'entraîneur (24).

6. Partie de brosse (34) selon l'une quelconque des revendications 1 à 3, **caractérisée en ce qu'**il est prévu un ressort hélicoïdal de compression (35), qui est disposé sur le côté de l'entraîneur (24) tourné vers le doigt (22) et qui prend appui sur le doigt (22) et sur l'arbre à emboîtement (3).

7. Partie de brosse (36) selon l'une quelconque des revendications 1 à 3, **caractérisée en ce qu'**il est prévu un ressort hélicoïdal de traction (37), qui est maintenu sur un côté de l'entraîneur (24) situé à l'opposé du doigt (22) et sur l'arbre à emboîtement (3).

8. Partie de brosse (1, 32, 34, 36) selon l'une quelconque des revendications 1 à 7, **caractérisée en ce que** la mise sous contrainte agit dans le sens de l'axe longitudinal (4).

9. Partie de brosse (1, 32, 34, 36) selon l'une quelconque des revendications 1 à 8, **caractérisée en ce que** l'entraîneur (24) et le doigt (22) sont mis sous contrainte avec l'arbre à emboîtement (3) et le support de soies (8).

10. Brosse à dents électrique avec une partie de brosse (1, 32, 34, 36) à coupler, en particulier à emboîter, selon l'une quelconque des revendications précédentes.
